# EUROPÄISCHE PATENTSCHRIFT

(11) **EP 1 745 919 B1**
(45) Veröffentlichungstag und Bekanntmachung des Hinweises auf die Patenterteilung: **06.08.2008**
(21) Anmeldenummer: 06114607.2
(22) Anmeldetag: 29.05.2006
(51) Int. Cl.: B29D 30/06, B29C 33/42

(54) **Form zur Ausformung der Profilierung eines Fahrzeugluftreifens**
Mould for obtaining the profile of a vehicle tyre
Moule pour former le profil d'un pneumatique pour véhicule.

(30) Priorität: 29.06.2005 DE 102005030176
(43) Veröffentlichungstag der Anmeldung: 24.01.2007
(73) Patentinhaber: Continental Aktiengesellschaft, 30165 Hannover (DE)
(72) Erfinder: Peda, Karl, 31515 Wunstorf (DE)

(56) Entgegenhaltungen:
- US-A- 2 850 066
- US-A- 3 067 506
- US-A1- 2003 101 851
- PATENT ABSTRACTS OF JAPAN -& JP 2005 212177 A (TOYO TIRE & RUBBER), 11. August 2005 (2005-08-11)

## Beschreibung

Die Erfindung betrifft eine Form zur Ausformung der Profilierung eines Fahrzeugluftreifens mit Feineinschnitten sowie ein Verfahren zur Herstellung eines Fahrzeugreifens mit profilierter Lauffläche mit Feineinschnitten im Laufflächenprofil.

Feineinschnitte im Laufflächenprofil von Fahrzeugluftreifen werden üblicherweise dadurch erzeugt, dass Lamellenbleche in hierzu in die Vulkanisationsform speziell eingefrästen Schlitzen befestigt werden, so dass sich das Lamellenblech von der Formoberfläche in den Raum zur Aufnahme und Ausformung des Reifenrohlings in der Vulkanisationsform hineinerstreckt. Der Reifenrohling wird üblicherweise zur Ausformung des Profiles mittels eines Heizbalges gegen die mit Lamellenblechen auf diese Weise bestückte Formoberfläche gepreßt, wodurch die Lauffläche des Fahrzeugluftreifens entsprechend der Profilierung der Formoberfläche profiliert wird. Die Lamellenbleche erzeugen hierbei feine Einschnitte im Laufflächenprofil des Fahrzeugluftreifens.

Zur Erzeugung von Feinsteinschnitten mit Lamellenblechen mit einer Dicke von weniger als 0,4mm erfordert die Herstellung von gefrästen Schlitzen in der Vulkanisationsform zur Aufnahme der Lamellenbleche zusätzlichen Aufwand und ist nur begrenzt möglich.

Es ist auch beispielsweise aus der DE3531047A1 bekannt, Feineinschnitte mit in radialer Richtung des Fahrzeugluftreifens veränderter Dicke auszubilden. Diese werden üblicherweise mittels gegossener Lamelleneinsätzen erzeugt. Das Gießen von Lamelleneinsätzen ist sehr aufwendig und kostenintensiv. Die Erzeugung von Feinsteinschnitten mit besonders dünnen Einschnittsdicken von weniger als 0,6 mm wird diese Herstellung zusätzlich gießtechnisch erschwert.

Daneben ist es bekannt, Lamellenbleche in gegossene Füße einzusetzen, die dann in der Vulkanisationsform befestigt werden. Lamellenblech und größerer Fuß ermöglichen die Ausbildung eines in seiner Dicke abgestuften Feineinschnittes, wie er beispielsweise aus der DE19900266A1 bekannt ist. Auch die Herstellung mittels gegossenem Fuß und in diesen eingesetzten Lamellenblech ermöglicht ist aufwendig und kostenintensiv. Die Erzeugung von Feinsteinschnitten mit besonders dünnen Einschnittsdicken von weniger als von weniger als 0,6 mm im dickeren Fußbereich wird auch bei dieser Herstellung zusätzlich gießtechnisch erschwert.

Aus der US2003/0101851A1 ist es bekannt mehrere Lamellenbleche aufeinander zukleben oder zu schweißen, um auf diese Weise Lamellenbleche mit unterschiedlichen Dicken und entsprechend Feineinschnitte mit unterschiedlichen Dicken zu erzielen. Diese Art der Herstellung von Lamellenbleche mit unterschiedlichen Dicken ist besonders aufwendig. Schweiß- bzw. Klebespuren müssen restlos beseitigt, eventuelle Verformungen beim Schweißen- bzw. Kleben aufwendig verhindert oder noch aufwendiger im Anschluß egalisiert werden. Bei sehr feinen Lamellenblechen zur Erzielung von Feinsteinschnitten mit Dicken von weniger als 0,4mm wird dies durch die erhöhte Gefahr der Verformbarkeit des Materials zusätzlich erschwert.

Der Erfindung liegt die Aufgabe zugrunde in einfacherer Weise die Herstellung von Feinsteinschnitten zu ermöglichen.

Erfindungsgemäß wird die Aufgabe durch die Ausbildung einer Form zur Ausformung der Profilierung eines Fahrzeugluftreifens mit Feineinschnitten mit einem Lamellenblech mit zwei in einer Falte auf einander zurückgefalteten Schenkeln, wobei die Falte in der Form befestigt ist und die beiden aufeinander zurückgefalteten Schenkel sich zur Bildung eines Feineinschnitts im Profil eines Fahrzeugluftreifens von der Formoberfläche wegweisend erstrecken, gemäß den Merkmalen von Anspruch 1 gelöst. Die Aufgabe wird erfindungsgemäß auch durch ein Verfahren zur Herstellung eines Fahrzeugreifens mit profilierter Lauffläche mit Feineinschnitten im Laufflächenprofil gemäß den Merkmalen von Anspruch 7 gelöst, bei dem ein unvulkanisierter Reifenrohling in einer Form zur Ausformung des Laufflächenprofils zur Bildung eines Feineinschnitts im Profil des Fahrzeugreifens gegen zwei von der Formoberfläche wegweisend erstreckte Schenkel eines gefalteten, mit seiner Falte in der Form befestigten Lamellenblechs gepresst wird und dabei die beiden Schenkel des Lamellenblechs in das Kautschukmaterial des Laufstreifens eindringen und hierdurch einen Feineinschnitt erzeugen, und bei dem der Reifenrohling danach vulkanisiert wird.

Durch einfaches Falten von Lamellenbleche wird im Bereich der Falte eine doppelte Dicke des Lamellenblechs erzielt die es ermöglicht, das Lamellenblech mit seiner Falte in einem hinsichtlich seiner Dicke dieser doppelten Dicke entsprechend ausgebildeten, beispielsweise gefrästen Schlitz in der Vulkanisationsform zu befestigen. Die beiden Schenkel ermöglichen es, den Feineinschnitt sehr individuell hinsichtlich des Dickenverlaufs durch entsprechende Gestaltung der Schenkel vor Falten zu gestalten. So können die Schenkel direkt bei Herstellung des Lamellenbleches bereits in ihrer späteren Kontur gestanzt oder in jeder sonstigen bekannten zur Ausformung von Blechteilen geeigneten Weise hergestellt werden. Hierdurch ist esmöglich sowohl sehr dünne Lamellenbleche zur Herstellung sehr dünner Feineinschnitte einfach und sicher in herkömmlich gefertigten Schlitze in der Vulkanisationsform zu befestigen und zusätzlich großen Gestaltungsspielraum bei der Dickengestaltung des zu erzeugenden Feineinschnitts zu gewähren.

Besonders vorteilhaft ist die Ausbildung gemäß den Merkmalen von Anspruch 2, bei der sich die beiden Schenkel des Lamellenblechs von der Falte unterschiedlich weit weg erstrecken. Hierdurch wird eine gezielte Abstufung der Dicke des Feineinschnitts in Tiefenrichtung des Feineinschnitts ermöglicht.

Besonders vorteilhaft ist die Ausbildung gemäß den Merkmalen von Anspruch 3, bei der wenigstens ein Schenkel mit längs der Falte veränderten Verlauf seiner von der Falte wegweisenden Erstreckungslänge ausgebildet ist. Hierdurch wird eine gezielte Konturierung des Tiefenverlaufs längs der Erstreckung des Feineinschnittes ermöglicht, wobei wahlweise nur ein Schenkel konturiert und somit nur eine Hälfte des Feineinschnitts in ihrem Tiefenverlauf konturiert oder aber beide Schenkel konturiert und somit beide Hälften des Feineinschnitts individuell in ihrem Tiefenverlauf konturiert werden können.

Besonders vorteilhaft ist die Ausbildung gemäß den Merkmalen von Anspruch 4, bei der das Lamellenblech wenigstens in einer Schnittebene parallel zur Faltachse einen Verlauf mit veränderter Richtung aufweist. Hierdurch sind längs ihrer Längenerstreckung konturierte Feineinschnitte möglich. Besonders vorteilhaft ist die Ausbildung gemäß den Merkmalen von Anspruch 5, bei der das Lamellenblech wenigstens in einer Schnittebene parallel zur Faltachse einen zickzackförmigen oder sinusförmigen Verlauf aufweist.

Besonders vorteilhaft ist die Ausbildung gemäß den Merkmalen von Anspruch 6, bei der das Lamellenblech wenigstens in einer Schnittebene senkrecht zur Faltachse einen Verlauf mit veränderter Richtung aufweist. Hierdurch sind längs ihrer Teifenerstreckung konturierte Feineinschnitte und somit auch dreidimensionale Feineinschnitte möglich.

Die Erfindung wird im Folgenden an Hand der in den Figuren 1 bis 7 dargestellten Ausführungsbeispiele näher erläutert. Hierin zeigen
- Fig. 1: Ausschnitt einer Vulkanisationsform mit eingesetztem erfindungsgemäßem Lamellenblech in Schnittdarstellung,
- Fig. 2: Ausschnitt der Vulkanisationsform von Fig. 1 mit eingesetztem erfindungsgemäßem Lamellenblech und gegen die Vulkanisationsform gepreßtem Laufflächenkautschukmaterial eines Reifenrohlings,
- Fig. 3: Ausschnitt der ausvulkanisierten entformten Lauffläche des aus dem Reifenrohling vulkanisierten Fahrzeugluftreifens mit erfindungsgemäßem Feineinschnitt,
- Fig. 4: Darstellung zur Erläuterung der Herstellung eines gefalteten Lamellenblechs, wobei Fig. 4a ein ungefaltetes Lamellenblech und Fig.4b ein aus dem in Fig. 4a dargestellten ungefalteten Lamellenblech gefaltetes Lamellenblech zeigt,
- Fig. 5: Darstellung des gefalteten Lamellenblechs von Fig.4b in einer Draufsicht gemäß Schnitt V-V von Fig.4b mit einer Schnittebene parallel zur Faltachse A, wobei Fig.5a ein einfach gefaltetes Lamellenblech zeigt, wobei Fig.5b ein nach dem Falten noch verformtes Lamellenblech in erster Ausführung und Fig. 5c ein nach dem Falten noch verformtes Lamellenblech in zweiter Ausführung zeigt,
- Fig. 6: Darstellung des gefalteten Lamellenblechs von Fig.4b in einer Draufsicht gemäß Schnitt VI-VI von Fig.4b mit einer Schnittebene senkrecht zur Faltachse A, wobei Fig.6a ein einfach gefaltetes Lamellenblech zeigt, wobei Fig.6b ein nach dem Falten noch verformtes Lamellenblech in erster Ausführung und Fig. 6c ein nach dem Falten noch verformtes Lamellenblech in zweiter Ausführung zeigt,
- Fig. 7: Darstellung des gefalteten Lamellenblechs von Fig.4b, wobei
Fig.7a ein einfach gefaltetes Lamellenblech mit unterschiedlicher Schenkellänge zeigt, wobei Fig.7b Ausführungsbeispiel mit ein einfach gefaltetes Lamellenblech mit gleichgroßer Schenkellänge zeigt, wobei Fig.7c ein Ausführungsbeispiel mit vor dem Falten gleichermaßen konturierten gegenüberliegenden Lamellenblechenden zeigt, und wobei Fig. 7d ein Ausführungsbeispiel mit vor dem Falten verschieden konturierten gegnüberliegenden Lamellenblechenden zeigt.

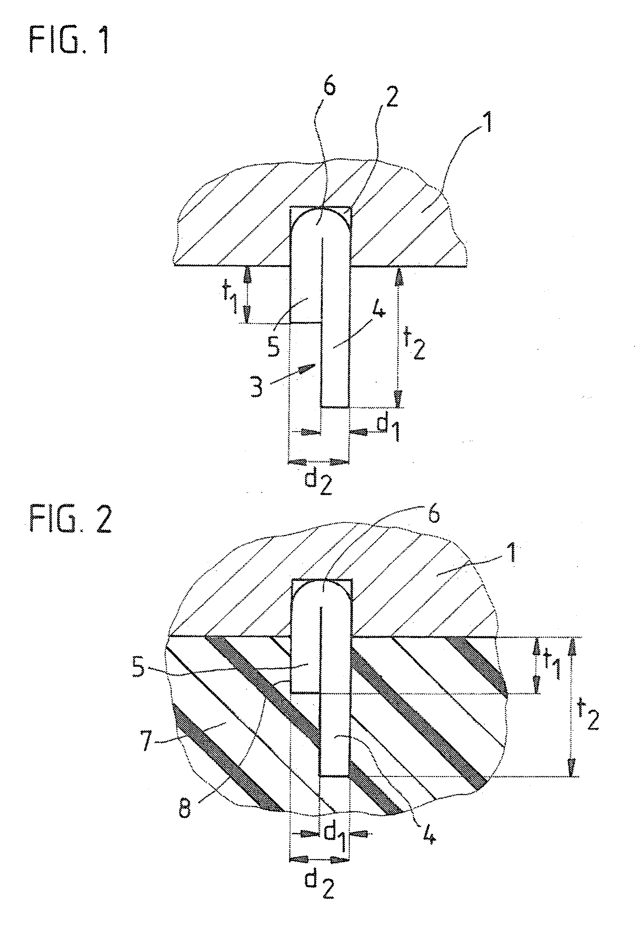

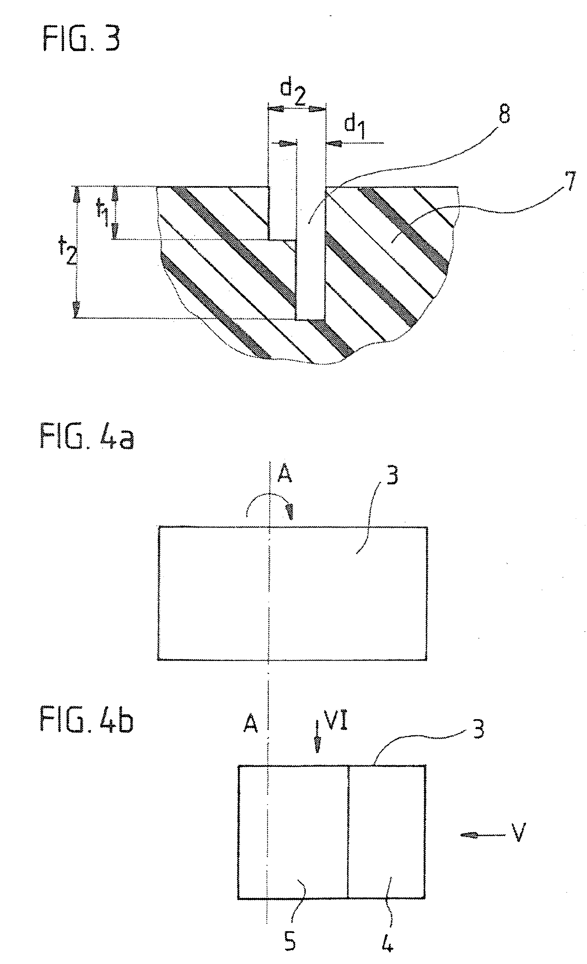

Fig. 1 zeigt einen Ausschnitt eines mit der negativen Profilierung eines herzustellenden Fahrzeugluftreifens ausgebildeten Laufflächenformabschnitts einer Vulkanisationsform zur Vulkanisation eines Fahrzeugluftreifens. Zur Herstellung eines Feineinschnitts in der Lauffläche des herzustellenden Fahrzeugluftreifens ist in der Vulkanisationsform 1 ein Schlitz 2 eingefräst, in den ein Lamellenblech 3 eingesetzt und in bekannter Weise befestigt ist. Das Lamellenblech 3 ist, wie in Fig. 4a und 4b dargestellt ist, aus einem ebenen gestanzten, plattenförmigen Lamellenblechmaterial der Dicke d₁, welches in Fig. 4a dargestellt ist, durch Falten um eine Achse A hergestellt, so dass der in Fig. 4a links von der Faltachse A dargestellte Erstreckungsbereich des Lamellenblechmaterials einen ersten Schenkel 5 und das in Fig. 4a rechts von der Faltachse A dargestellte Erstreckungsbereich des Lamellenblechs 3 einen zweiten Schenkel 4 des Lamellenblechs 3 bildet, wobei der Schenkel 5 soweit auf den Schenkel 4 zurückgefaltet ist, dass Berührkontakt zwischen Schenkel 4 und 5 gegeben ist.

Das auf diese Weise hergestellte Lamellenblech 3 mit den Schenkeln 4 und 5 ist mit seinem Falz 6 in den gefrästen Schlitz 2 eingeführt und in bekannter Weise befestigt. Die Schenkel 5 und 4 des Lamellenblechs erstrecken sich dabei aus der Vulkanisationsform 1 soweit in den Raum zur Aufnahme des Fahrzeugluftreifens während der Ausformung und Vulkanisation hinein, dass sich der Schenkel 5 in der Position der Befestigung des Lamellenblechs 3 maximal bis zu einem senkrechten Abstand t₁ von der Oberfläche der Vulkanisationsorm 1 und der Schenkel 4 bis zu einem maximalen senkrechten Abstand t₂ von der Oberfläche der Vulkanisationsform 1 in den Raum hinein erstreckt.

Zur Ausformung und Vulkanisation eines Fahrzeugluftreifens wird der Reifenrohling üblicherweise in die Vulkanisationsform eingeführt und mittels eines Heizbalgs in bekannter Weise radial expandiert und dabei nach außen gegen die Vulkanisationsform 1 gepresst, so dass das Kautschukmaterial des Laufstreifens in die Profilierung der Vulkanisationsform 1 gepresst wird. An den Positionen, an denen in der Vulkanisationsform 1 jeweils ein Lamellenblech 3 befestigt ist, wird - wie in Fig. 2 dargestellt ist - das Kautschukmaterial des Laufstreifens derart gegen die Vulkanisationsform 1 gepresst, dass die Schenkel 4 und 5 des Lamellenblechs 3 zur Ausformung eines Feineinschnitts 8 im Kautschukmaterial des Laufstreifens in das Kautschukmaterial des Laufstreifens eindringen und dabei den Feineinschnitt 8 ausformen. Der Schenkel 5 bildet dabei einen ersten Abschnittsbereich des Feineinschnitts 8 mit einer maximalen Tiefe t₁ und der Schenkel 4 einen zweiten Abschnittsbereich des Feineinschnitts 8 mit einer maximalen Tiefe t₂ im Kautschukmaterial des Laufstreifens ab. Nach Ausvulkanisation wird der ausvulkanisierte Fahrzeugluftreifen in bekannter Weise aus der Vulkanisationsform entformt.

Im ausvulkanisierten Gummimaterial des Fahrzeugluftreifens ist dann - wie in Fig. 3 dargestellt ist - ein fein abgestufter Feineinschnitt 8 ausgebildet, bei dem sich die erste Stufe bis in eine maximale Tiefe t₁ und die zweite Stufe bis in eine maximale Tiefe t₂ hinein erstreckt.

Das einfache plattenförmige Lamellenblechmaterial von Fig. 4a weist eine in diese Figur 4a nicht dargestellte Dicke d₁ des Bleches auf. Das hierdurch erzeugte, gefaltete Lamellenblech von Fig. 4b weist - wie in Fig. 1 zu erkennen ist - im Bereich des Falzes und über den Erstreckungsbereich des kürzeren Schenkels 5 hinweg eine Gesamtdicke d₂ = (2 d₁) und in dem über den Erstreckungsbereich des kürzeren Schenkels 5 hinausreichenden Erstreckungsbereich des längeren Schenkel 4 die einfache Dicke d₁ auf.

Der gefräste Schlitz 2 ist ebenfalls in einer Breite hergestellt, die zur Befestigung der mit auf diese Weise doppelter Blechdicke d₂ = (2 d₁) ausgestalteten Falzdicke geeignet ist.

Wie in Fig. 3 zu erkennen ist, ist die Dicke des Feineinschnitts im radial äußeren Bereich eines Fahrzeugluftreifenprofils über die Erstreckungslänge t₁ von der Straßenkontaktoberfläche des Laufstreifens mit einer Dicke d₂ und in dem weiter radial nach innen reichenden Erstreckungsbereich, der sich bis in die Tiefe t₂ erstreckt, lediglich mit einer Dicke d₁ ausgebildet mit d₂ = (2 d₁).

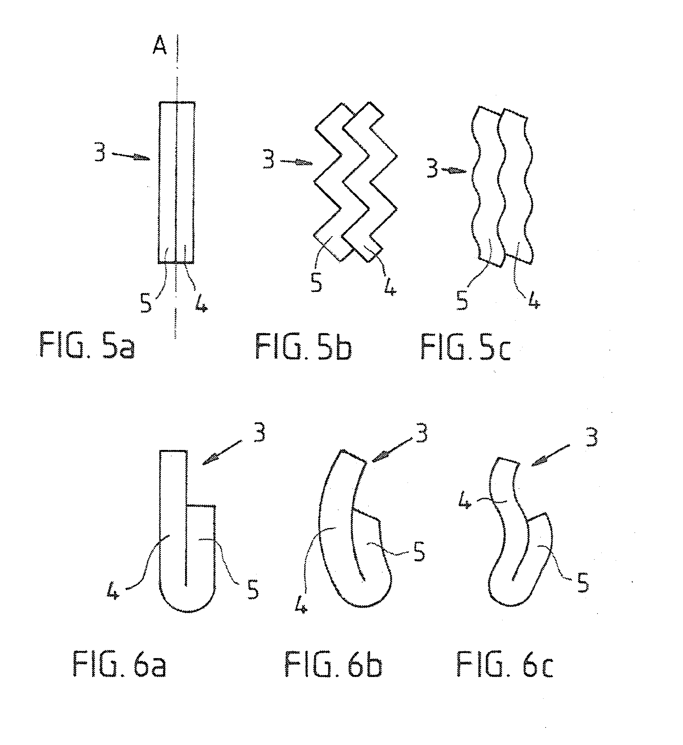

Das in Figur 4b durch einfaches Falten aus dem in Fig. 4a dargestellten Lamellenblechmaterial erzielte Lamellenblech 3 weist, wie in Fig. 5a zu erkennen ist, eine längs zur Erstreckungsrichtung der Faltachse A parallelen, geradlinigen Verlauf auf.

In einer anderen Ausführung ist es möglich, das in Fig. 4b und Fig. 5a dargestellte Lamellenblech 3 im Anschluss an das Falzen zusätzlich gezielt durch bekannte Verformungstechniken ― beispielsweise durch Pressen, Tiefziehen oder sonstige geeignete bekannte Verfahren - zu deformieren. Fig. 5b zeigt ein Ausführungsbeispiel, bei dem das Lamellenblech von Fig. 4b und Fig.5a nach dem Falten derart deformiert wurde, dass in den Schnittebenen parallel zur Faltachse das Lamellenblech 3 mit seinen Schenkeln 4 und 5 eine zick-zack-förmige Kontur erhält. Mit einem solchen Lamellenblech 3 ist die Herstellung von zick-zackförmigen Feineinschnitten im Laufflächenprofil eines Reifens möglich. Fig. 5c zeigt ein entsprechend deformiertes Lamellenblech 3 mit sinusförmigem Konturenverlauf in Schnittebenen parallel zur Faltachse A zur Erzeugung von sinusförmigen Feineinschnitten.

Fig. 6a zeigt das Lamellenblech von Fig. 1, bei dem in allen Schnittebenen senkrecht zur Faltachse A jeweils die Schenkel 4 und 5 sich parallel geradlinig von der Faltachse wegerstrecken. In einer anderen Ausführung wird ein Lamellenblech 3 durch bekannte Verformungstechniken - beispielsweise durch Pressen, Tiefziehen oder sonstige, bekannte geeignete Verformungstechniken - nach dem Falten so deformiert, dass zumindest teilweise in Schnittebenen senkrecht zur Faltachse A das Lamellenblech 3 einen nicht geradlinigen, sondern beispielsweise einen gekrümmt konturierten Verlauf erhält. Fig. 6b zeigt dabei ein Ausführungsbeispiel, bei dem die Schenkel 4 und 5 einfach gekrümmt ausgebildet sind. Fig. 6c zeigt ein anderes Ausführungsbeispiel, bei dem die Schenkel 4 und 5 mehrfach gekrümmt - beispielsweise s-förmig gekrümmt - ausgebildet sind. Dabei ist es in einer Ausführung möglich - wie in Fig. 6c dargestellt ist ― die Schenkel 5 und 6 so auszubilden, dass der kürzere Schenkel 5 lediglich einfach gekrümmt und der längere Schenkel 4 S-förmig gekrümmt ausgebildet ist. Ebenso ist es in einer Ausführung möglich, beide Schenkel 4 und 5 so auszubilden, dass beide S-förmig ausgebildet wird.

In einem weiteren nicht dargestellten Ausführungsbeispiel weist ein gefaltetes Lamellenblech 3 über seine gesamte Erstreckung längs der Faltachse A in allen senkrechten Ebenen zur Faltachse einen derartig nicht geradlinigen Verlauf auf.

Die Deformation der Lamellenbleche 3 in Schnittebenen senkrecht zur Faltachse ermöglicht die Herstellung von dreidimensional gekrümmten Feineinschnitten. In einer weiteren Ausführung ist es hierzu möglich, die im Zusammenhang mit der Erläuterung der Figuren 5a bis 5c beschriebenen Krümmungen in Schnittebenen parallel zur Faltachse A zusätzlich mit den im Zusammenhang mit der Erläuterung der Figuren 6a bis 6c beschriebenen Krümmungen in Ebenen senkrecht zur Faltachse A zu kombinieren.

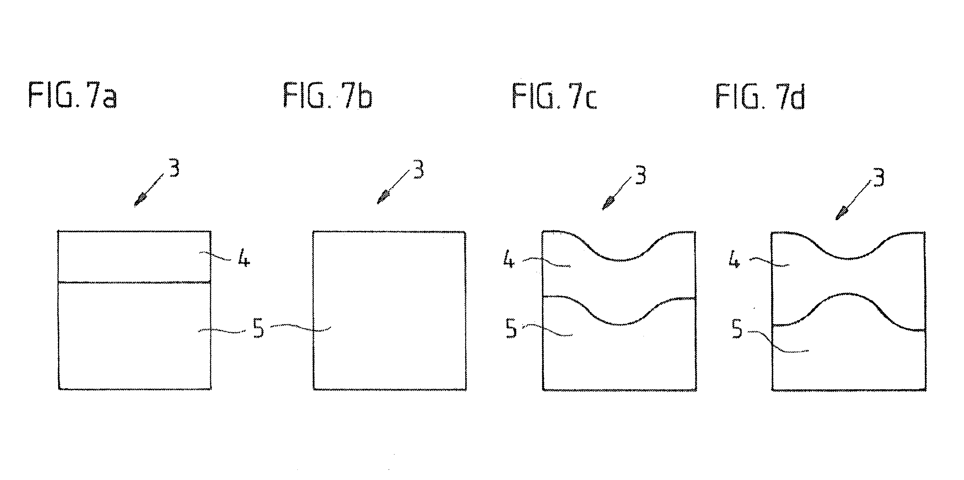

Fig. 7a zeigt ein Ausführungsbeispiel des in Fig. 4b und Fig. 1 dargestellten Lamellenblechs 3, bei dem die Schenkel 4 und 5 an ihren beiden von der Faltachse A wegweisenden Enden jeweils parallel zur Faltachse geradlinig verlaufen. In einer anderen - in den Figuren 7c und Fig. 7d dargestellten - Ausführung sind die beiden Schenkel 4 und 5 an ihren von der Faltachse wegweisenden Schenkelenden jeweils mit einem gezielt konturierten, nicht geradlinigen Verlauf ausgebildet. Dies wird beispielsweise dadurch erreicht, dass das in Fig. 4a dargestellte noch nicht gefaltete plattenförmige Lamellenblechmaterial bei seiner Herstellung beispielsweise durch Stanzen an den beiden von der beabsichtigten Faltachse A wegweisenden Enden direkt konturiert ausgestanzt werden.

Die Kontur der beiden Schenkelenden bildet im Fahrzeugluftreifen den Tiefenkonturverlauf der beiden durch die Schenkel 4 und 5 gebildeten Stufen des Feineinschnitts 8. Wie in Fig. 7c dargestellt ist - ist in einer Ausführung der Konturverlauf der Enden der beiden Schenkel 4 und 5 gleich verlaufend oder - wie in Fig. 7d dargestellt ist ―in anderer Ausführung unterschiedlich - beispielsweise wie in Fig. 7d dargestellt ist - gegenläufig ausgebildet.

Die Schenkel 4 und 5 können bei Erfordernis auch - wie in Fig. 7b dargestellt ist - gleichlang ausgebildet werden. In dieser Ausführung ist trotz gleicher Länge der Schenkel noch eine differenzierte Konturierung der Schenkelenden, wie sie im Zusammenhang mit den Erläuterungen zu den Ausführungsbeispielen der Figuren 7c und 7d beschrieben wurde, möglich.

Die einfache Dicke d₁ der Lamellenbleche 3 ist so gewählt, dass 0,1 mm ≤ d₁≤ 1,0 mm. Da d₂ = (2 d₁) folgt: 0,2 mm ≤d₂ ≤2mm. Beispielsweise ist d₁ = 0,2 mm und d₂= 0,4 mm.

### Bezugszeichenliste

### (Teil der Beschreibung)

- 1: Vulkanisationsform
- 2: Schlitz
- 3: Lamellenblech
- 4: Schenkel
- 5: Schenkel
- 6: Falz
- 7: Laufflächenprofil
- 8: Feineinschnitt

## Patentansprüche

1. Form (1) zur Ausformung der Profilierung eines Fahrzeugluftreifens mit Feineinschnitten, mit einem Lamellenblech (3) mit zwei in einer Falte (6) auf einander zurückgefalteten Schenkeln (4,5), wobei die Falte (6) in der Form (1) befestigt ist und die beiden aufeinander zurückgefalteten Schenkel (4,5) sich zur Bildung eines Feineinschnitts (8) im Profil eines Fahrzeugluftreifens von der Formoberfläche wegweisend erstrecken.

2. Form gemäß den Merkmalen von Anspruch 1,
wobei sich die beiden Schenkel (4,5) des Lamellenblechs (3) von der Falte (6) unterschiedlich weit weg erstrecken.

3. Form gemäß den Merkmalen von Anspruch 1 oder 2,
wobei wenigstens ein Schenkel (4,5) mit längs der Falte (6) veränderten Verlauf seiner von der Falte (6) wegweisenden Erstreckungslänge ausgebildet ist.

4. Form gemäß den Merkmalen von Anspruch 1,2 oder 3,
wobei das Lamellenblech (3) wenigstens in einer Schnittebene parallel zur Faltachse (A) einen Verlauf mit veränderter Richtung aufweist.

5. Form gemäß den Merkmalen von Anspruch 4,
wobei das Lamellenblech (3) wenigstens in einer Schnittebene parallel zur Faltachse (A) einen zickzackförmigen oder sinusförmigen Verlauf aufweist.

6. Form gemäß den Merkmalen von einem oder mehreren der vorangegangenen Ansprüche,
wobei das Lamellenblech (3) wenigstens in einer Schnittebene senkrecht zur Faltachse (A) einen Verlauf mit veränderter Richtung aufweist.

7. Verfahren zur Herstellung eines Fahrzeugreifens mit profilierter Lauffläche mit Feineinschnitten im Laufflächenprofil,
bei dem ein unvulkanisierter Reifenrohling in einer Form (1) zur Ausformung des Laufflächenprofils zur Bildung eines Feineinschnitts (8) im Profil des Fahrzeugreifens gegen zwei von der Formoberfläche wegweisend erstreckte Schenkel (4,5) eines gefalteten, mit seiner Falte in der Form befestigten Lamellenblechs (3) gepresst wird und dabei die beiden Schenkel des Lamellenblechs in das Kautschukmaterial des Laufstreifens eindringen und hierdurch einen Feineinschnitt erzeugen, und bei dem der Reifenrohling danach vulkanisiert wird.

## Claims

1. Mould (1) for obtaining the profile of a pneumatic vehicle tyre with sipes, comprising a lamella strip (3) with two shanks (4, 5) folded back on each other in a fold (6), the fold (6) being fastened in the mould (1) and the two shanks (4, 5) that are folded back on each other extending away from the surface of the mould to form a sipe (8) in the profile of a pneumatic vehicle tyre.

2. Mould according to the features of Claim 1, the two shanks (4, 5) of the lamella strip (3) extending away from the fold (6) by different amounts.

3. Mould according to the features of Claim 1 or 2, at least one shank (4, 5) being formed with the path followed by the length of its extent away from the fold (6) changing along the fold (6).

4. Mould according to the features of Claim 1, 2 or 3, the lamella strip (3) having a path that changes in its direction at least in a sectional plane parallel to the folding axis (A).

5. Mould according to the features of Claim 4, the lamella strip (3) having a zigzag-shaped or sinusoidal path at least in a sectional plane parallel to the folding axis (A).

6. Mould according to the features of one or more of the preceding claims, the lamella strip (3) having a path that changes in its direction at least in a sectional plane perpendicular to the folding axis (A).

7. Method for producing a vehicle tyre with a profiled tread with sipes in the tread profile, in which, to form a sipe (8) in the profile of the vehicle tyre, in a mould (1) to obtain the tread profile an unvulcanized green tyre is pressed against two shanks (4, 5), extending away from the mould surface, of a folded lamella strip (3) that is fastened with its fold in the mould, and in the process the two shanks of the lamella strip penetrate into the rubber material of the tread strip and thereby create a sipe, and in which the green tyre is then vulcanized.

## Revendications

1. Moule (1) pour former le profil d'un bandage pneumatique de véhicule qui présente de fines entailles, le moule présentant une tôle à lamelle (3) dotée de deux ailes (4, 5) rabattues l'une sur l'autre par un pli (6), le pli (6) étant fixé dans le moule (1) et les deux ailes (4, 5) rabattues l'une sur l'autre débordant de la surface du moule pour former une fine entaille (8) dans le profil du bandage pneumatique de véhicule.

2. Moule selon les caractéristiques de la revendication 1, dans lequel les deux ailes (4, 5) de la tôle à lamelle (3) débordent du pli (6) sur des longueurs différentes.

3. Moule selon les caractéristiques des revendications 1 ou 2, dans lequel au moins une aile (4, 5) dont l'extension qui s'éloigne du pli (6) varie le long du pli (6) est formée.

4. Moule selon les caractéristiques des revendications 1, 2 ou 3, dans lequel au moins dans un plan de coupe parallèle à l'axe (A) du pli, la tôle à lamelle (3) présente un parcours dont la direction est modifiée.

5. Moule selon les caractéristiques de la revendication 4, dans laquelle au moins dans un plan coupe courbe parallèle à l'axe (A) du pli, la tôle à lamelle (3) présente un parcours en zigzag ou sinusoïdal.

6. Moule selon les caractéristiques d'une ou plusieurs des revendications précédentes, dans lequel au moins dans un plan de coupe perpendiculaire à l'axe (A) du pli, la tôle à lamelle (3) présente un parcours de direction modifiée.

7. Procédé de fabrication d'un bandage pour véhicule à surface de roulement profilée et dotée de fines entailles dans le profil de la surface de roulement, dans lequel une ébauche non vulcanisée de bandage est repoussée contre deux ailes (4, 5) d'une tôle à lamelle (3) repliée et fixée dans le moule par son pli, les ailes s'éloignant de la surface du moule, dans un moule (1) qui forme le profil de surface de roulement avec une fine entaille (8) dans le profil du bandage pour véhicule, les deux ailes de la tôle de lamelles pénétrant dans le matériau de caoutchouc de la bande de roulement et formant ainsi une fine entaille, et dans lequel l'ébauche de bandage est ensuite vulcanisée.
